# EUROPEAN PATENT APPLICATION

(11) **EP 1 923 170 A2**
(43) Date of publication of application: **21.05.2008**
(21) Application number: 07017678.9
(22) Date of filing: 10.09.2007
(51) Int. Cl.: B23Q 39/02, B23B 3/16

(54) **Automatic lathe**

(30) Priority: 15.11.2006 KR 20060112765
(71) Applicant: HANWHA TECH M Co., Ltd., Changwon-city Kyoungnam-do (KR)
(72) Inventor: Kong, Deok Geun, Changwon-city Kyoungnam-do (KR); Kim, Jung Uk, Changwon-city Kyoungnam-do (KR); Kwon, Byung Ho, Changwon-city Kyoungnam-do (KR)
(74) Representative: HOFFMANN EITLE

(57) **Abstract**

The present invention relates to an automatic lathe, and more particularly, to an automatic lathe, which is characterized by comprising opposing type tool posts, and constructing a first tool post (13) and a second tool post (14), which are mounted to the automatic lathe, to be opposing type, mounting a fixed tool and a rotary tool to a third tool post (15) and adding a transferring shaft to the third tool post (15), to thereby mount tools to the opposing type first tool post (13) and the second tool post (14), so that a side surface and a front surface of a workpiece can be machined to enable the machining such as drilling, tapping, end-mill machining, inclination hole machining, wheeling, and the like to be carried out simultaneously, thereby reducing a machining cycle time to increase a production efficiency and maximize a machining efficiency,. In addition, the present invention maximizes the machining capacity of a rear surface by adding a transferring shaft and mounting a fixed tool and a rotary tool to a rear tool post(40), and can measure a load amount value of a servomotor by carrying out a sample machining, grasp whether tools are out of order or not by using the measured load amount value of the motor, and detect a cut state of the workpiece.

## Description

### REARGROUND OF THE INVENTION

### Field of the Invention

The present invention relates to an automatic lathe, and more particularly, to an automatic lathe, which is characterized by comprising opposing type tool posts, and constructing a first tool post and a second tool post, which are mounted at the automatic lathe, to be opposing type, mounting a fixed tool and a rotary tool to a third tool post and adding a transferring shaft to the third tool post, to thereby mount tools to the opposing type first tool post and the second tool post, so that a side surface and a front surface of a workpiece can be machined to enable the machining such as drilling, tapping, end-mill machining, inclination hole machining, wheeling, and the like to be carried out simultaneously, thereby reducing a machining cycle time to increase a production efficiency and maximize a machining efficiency

In addition, the present invention maximizes the machining capacity of a rear surface by adding a transferring shaft and mounting a fixed tool and a rotary tool to a rear tool post, and can measure a load amount value of a servomotor by carrying out sample machining, grasp whether tools are out of order or not by using the measured load amount value of the motor, and detect a cut state of the workpiece.

### Background of the Related Art

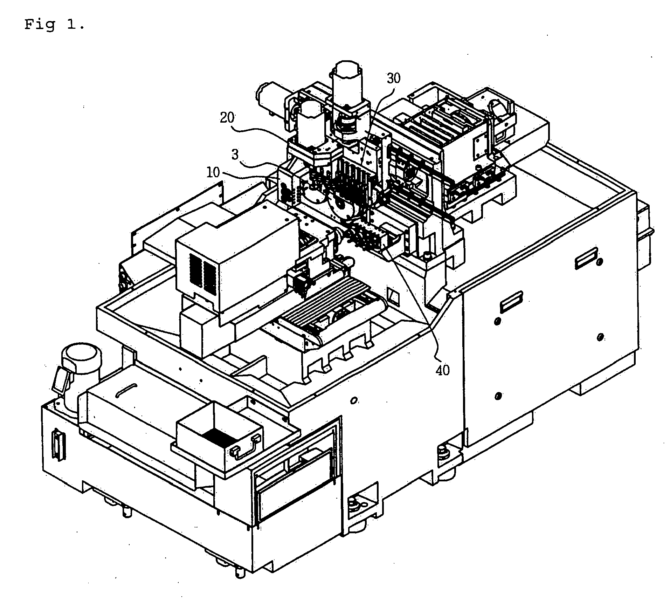

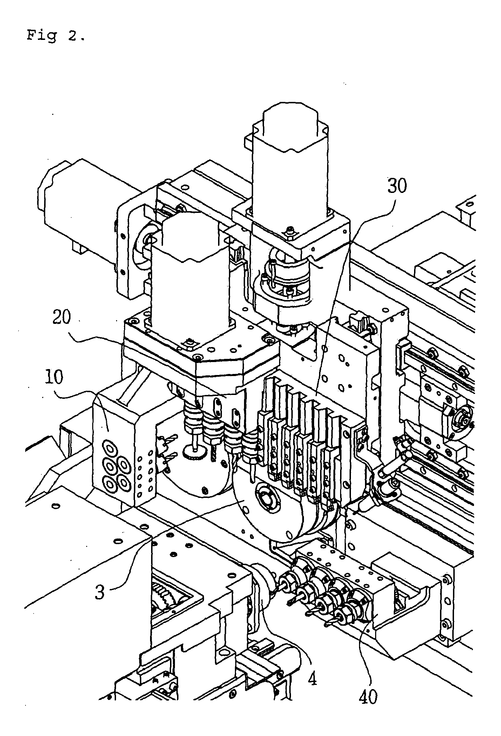

In FIGs.1 and 2, conventional automatic lathes are shown, and the conventional automatic lathe shown in FIG. 1 comprises a main shaft for chucking a machining material, a guide bush 3 positioned on an extended line of the main shaft for guiding the machining material, a sub-shaft 4 for chucking other end of the machining material, a rear tool post 40 mounted at a side of the guide bush 3 for machining the rear surface of the workpiece, a cross tool post 20 mounted above the guide bush 3 for carrying out a machining such as drilling, milling, and the like, an outer diameter tool post 30 for carrying out lathe machining such as cutting, and thread machining, and the like, and a front tool post 10 for machining a front surface of the workpiece chucked to the guide bush 3.

However, the conventional automatic lathe has limitations in a stroke because tools were disposed sequentially such that the cross tool post 20 and the outer-diameter tool post 30 were mounted above the guide bush 3, and the rear tool post 40 was mounted for the machining of the rear surface of the material, a cycle time of the machining was too long because the machining should be carried out sequentially too, and it was difficult to machine an inclination hole or a side surface of the workpiece.

In addition, since it was not possible to confirm whether the tool was out of order or not by the naked eye, the machining could be progressed continuously to cause disorder, when the cutting was not carried out completely or the machining was not carried out clearly, and the tool posts and the tools could be damaged because following works could be progressed when the cutting was not completely carried out due to the breakdown of a bite, and the like, so that user should always keep an eye on the automatic lathe to prevent such problems, causing several inconveniences. '

### SUMMARY OF THE INVENTION

Accordingly, the present invention has been made in view of the above-mentioned problems occurring in the prior art, and it is a primary object of the present invention to provide an automatic lathe, which can construct a first tool post (TOOL POST1) and a second tool post (TOOL POST2), which are mounted in place of a front tool post, a cross tool post, and an outer-diameter tool post, at the automatic lathe, to be opposing type with respect to a guide bush, and mounting a separate transferring shaft to a third tool post (TOOL POST3), which corresponds to a rear tool post of the conventional automatic lathe, so that machining of a workpiece such as drilling, tapping, end-mill machining, inclination hole machining, wheeling, and the like can be carried out simultaneously, thereby reducing a machining cycle time to increase a production efficiency and maximize a machining efficiency.

In addition, another object of the present invention is to provide an automatic lathe, which can measure a load amount value of a motor through sample machining, detect whether the tool is out of order or not and the cut state of the workpiece automatically by using the measured load amount value of the motor, stop the machining when the tool is out of order, and inform it of the user by way of an alarm and a warning lamp, and the like.

To accomplish the above object of the present invention, according to the present invention, there is provided an automatic lathe comprising a guide bush for guiding a workpiece, and formed with a main spindle and a subspindle for transferring the workpiece, and at least one tool post for machining the workpiece, on which cutting tools are mounted, characterized in that the tool post of the automatic lathe is constructed of a first tool post mounted at one side of the guide bush for machining a side surface and a front surface of the workpiece, a second tool post mounted to be opposite to the first tool post with respect to the guide bush for machining the side surface and the front surface of the workpiece, and a third tool post mounted at one side of the guide bush for post-machining the workpiece chucked to the sub-shaft.

### BRIEF DESCRIPTION OF THE DRAWINGS

The above and other objects, features and advantages of the present invention will be apparent from the following detailed description of the preferred embodiments of the invention in conjunction with the accompanying drawings, in which:

FIG.1 is an illustrative construction view of a conventional automatic lathe;

FIG. 2 is a partial enlarged view of FIG. 1;

FIG. 3 is an illustrative construction view of a portion of the present invention;

FIG. 4 is a side construction view of FIG. 3;

FIG. 5 is an illustrative view of an embodiment of the present invention;

FIG. 6 is an illustrative view of another embodiment of the present invention;

FIG. 7 is a block diagram of a method of monitoring a tool according to the present invention; and

FIG. 8 is a block diagram of a method of detecting a cut of a workpiece according to the present invention.

### DETAILED DESCRIPTION OF THE PREFERRED EMBODIMENT

Hereinafter, the automatic lathe of the present invention will be described in detail with reference to the appended drawings.

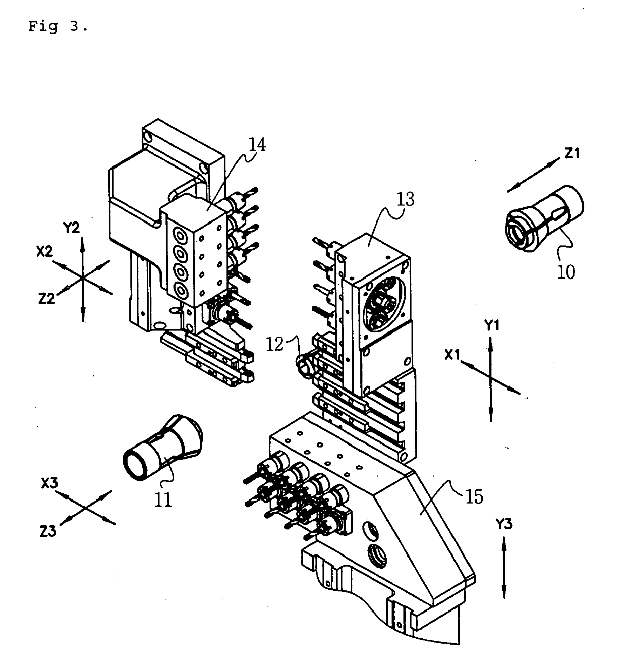

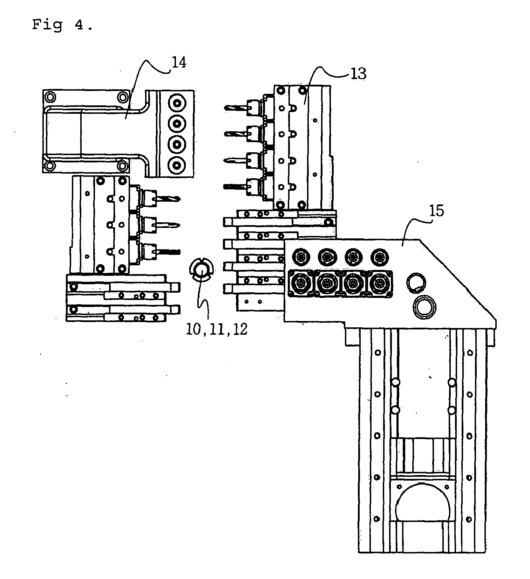

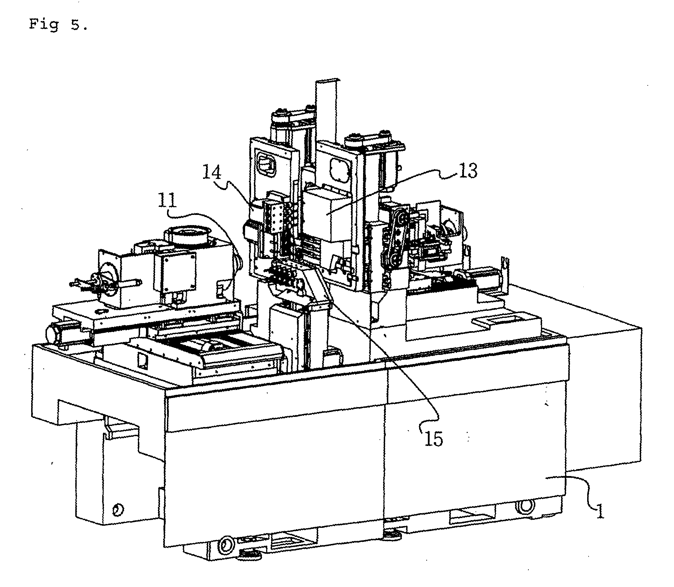

FIG. 3 is an illustrative construction view of a portion of the present invention, FIG. 4 is a side construction view of FIG. 3, and FIG. 5 is an illustrative view of an embodiment of the present invention. As shown in the drawings, the automatic lathe according to the present invention comprises a guide bush 12 for guiding a workpiece and formed with a main spindle (main shaft) 10 and a sub spindle (sub-shaft) 11 for transferring the workpiece, and at least one tool post provided with cutting tools for machining the workpiece, wherein the tool post of the automatic lathe is constructed of a first tool post (TOOL POST1; 13) mounted at one side of the guide bush 12 for machining a side surface and a front surface of the workpiece, a second tool post (TOOL POST2; 14) mounted to be opposite to the first tool post (TOOL POST 1) 13 with respect to the guide bush 12 for machining the side surface and the front surface of the workpiece, and a third tool post (TOOL POST3) 15 mounted at a side of the guide bush 12 for post-machining the workpiece chucked to the sub-shaft. The un-explained numeral is a body 1.

Herein, the first tool post 13 can reciprocate in the right and left direction X1 of the workpiece and in the upward and downward direction Y1 of the workpiece, the second tool post 14 can reciprocate in the upward and downward direction Y2 of the workpiece and in the front and rear direction Z2 of the workpiece, and the third tool post 15 can reciprocate in the upward and downward direction Y3 of the workpiece.

Also, the main spindle 10 can reciprocate in the front and rear direction Z1 of the workpiece, and the subspindle 11 can reciprocate in the front and rear direction Z3 and in the right and left direction X3 of the workpiece.

In the specification of the present invention, the Z direction is a transferring direction of the workpiece, that is, a direction of a center axis of the main spindle 10 and the subspindle 11, the Y direction is an upward and downward direction of the workpiece, that is, a direction ascending and descending from a base surface of the automatic lathe, and the X direction is a right and left direction of the workpiece, that is, a transferring direction parallel with the base surface of the automatic lathe.

In addition, X1, X2, X3 directions are all directions extending in the X direction and divided for convenience's sake, Y1, Y2, Y3 directions and Z1, Z2, Z3 directions are the same.

The main spindle 10 is a main shaft for transferring the workpiece, and it can move in the transferring direction Z1 of the workpiece, the subspindle 11 can also move in the transferring direction Z3 of the workpiece. Also, the subspindle 11 can reciprocate in the right and left direction, that is, in the X3 direction, together with reciprocating in the z3 direction.

As shown in FIG. 2, various tools such as a drill, a tap, and the like can be mounted to the first tool post 13 for machining the side surface and the front surface of the workpiece. In this regard, the tool is mounted to face the side of the workpiece. Also, the outer-diameter machining tool such as a bite, and the like, or the cutting tool can be mounted to it.

Also, tools can be mounted to the second tool post 14 for machining the side surface of the workpiece, and tools can be mounted to face the front surface thereof so that it can machine the front surface of the workpiece. Also, the outer-diameter machining tool such as a bite, and the like, or the cutting tool can be mounted to it.

The most important feature of the present invention is to construct the first tool post 13 and the second tool post 14 so that they face with each other with respect to the guide bush 12 to be able to machine the right and left side surfaces of the workpiece at the same time, and they can machine the front surface and the side surface of the workpiece at the same time. Also, when the workpiece was chucked to the subspindle 11, the side surface can be machined simultaneously, when the outer diameter, the rear surface (cross-section), and the like of the workpiece are machined by the TOOL POST3 15.

Herein, while the TOOL POST1 13 is moved only in the X1 and Y1 directions because the front surface and the side surface of the workpiece are machined, however, in case of the TOOL POST2 14, since the machining such as the drilling, the tapping, and the like of the side surface and the front surface of the workpiece was carried out simultaneously, the machining of the workpiece can be facilitated only when the workpiece can be transferred in the Z2 direction as well as in the X2 and Y2 directions.

The TOOL POST3 15 is a tool post for machining a cut surface, that is a rear surface of the workpiece, when the workpiece was cut by TOOL POST1 13 or by TOOL POST2 14 and the cut workpiece was chucked by the subspindle 11, and it can suffice to be transferred in the Y3 direction. Thus the third tool post 15 is not required to move in the X3 and Z3 directions because the subspindle 11 is transferred in the X3 and Z3 directions. According to the circumstances, the third tool post 15 can be constructed to move in the X-axis direction together with in the Y3 direction.

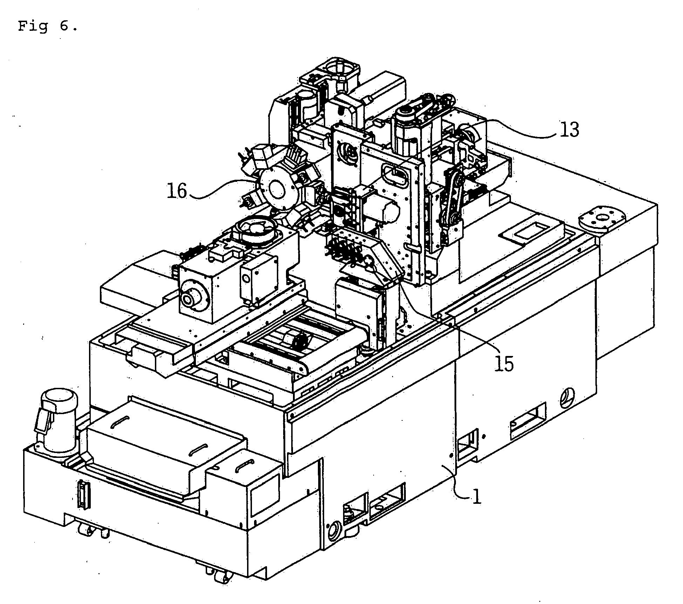

FIG. 6 is an illustrative view of another embodiment of the present invention, in which a tool turret 15 may be provided instead of the TOOL POST2 14.

The tool turret 15, which is not generally used in an automatic lathe, is usually provided with eight to twelve tool holders or so. Since it is possible to index the tools to exchange them, more tools than the TOOL POST2 14 can be installed, and the machining of a workpiece having a complicated shape is facilitated due to the installation of various tools. In addition, the too turret 15 is advantageous in that since it is installed to be opposite to the TOOL POST1 13, it is possible to simultaneously machine right and left sides of the workpiece, so that the machining time thereof can be reduced, and diverse shapes of machining such as the machining of an inclined-shaped hole or a tapered surface, and the like, can be achieved.

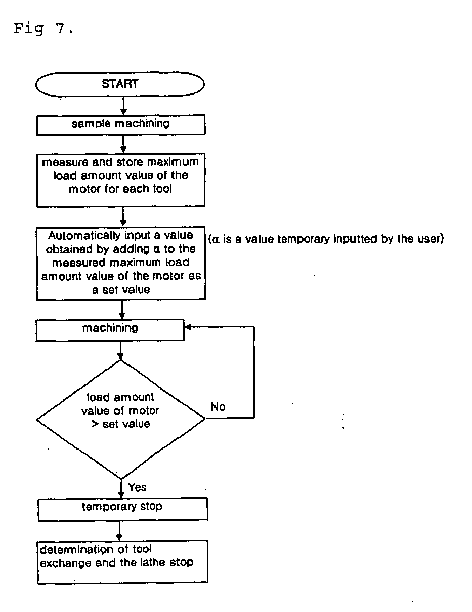

FIG. 7 is an illustrative view showing another embodiment of the present invention, in which a tool turret 15 can be mounted in place of the second tool post 14.

The tool turret 15, while it is not generally used in the automatic lathe, is usually provided with eight to twelve tool holders, and it is possible to mount more tools than the TOOL POST2 14 because it can be indexed for exchanging the tools, so that it is possible to easily machine a workpiece having a complex shape.

Also, there are advantages that it is possible to reduce the machining time because the tool turret is constructed to face with the TOOL POST1 13 to enable the machining of the right and left surfaces of the workpiece at the same time, and carry out various machining such as a machining of an inclination hole or a machining of a taper surface, and the like.

FIG. 7 is a block diagram of a method of monitoring a tool according to the present invention. Reviewing the process of the progressing of the present invention in order, at first, at least one of the sample machining is carried out to measure the load amount of the servomotors mounted behind the tool posts 13, 14, 15. Measuring the maximum load amount value of the servomotor for each tool appeared through the sample machining, and store it. In this regard, more accurate values can be obtained so long as the number of the sample machining becomes more.

Then, the set value is automatically inputted on the basis of the measured maximum load amount value of the servomotor, it is preferable for the set value to be inputted after adding a predetermined amount (α) to the maximum load amount value of the motor.

In other words, the user can set the value of α preliminarily, and he can input it after he arbitrarily sets the value of α.

Then, machining is carried out with measuring the load amount value of the motor in real time, and when the measured load amount value of the motor is lower than that of the set value, the machining is progressed continuously, and when the measured load amount value of the motor is higher than that of the set value, a message is displayed on a display screen and the lathe will temporary be stopped.

Then, the user determines whether the lathe should be completely stopped or the machining should be continued, after the user confirmed the state of the abrasion or the damage of the tool.

Herein, the servomotors for controlling the tools during the machining of the workpiece, are transferred at high speed according to an inputted program, and it is necessary to remove an acceleration or deceleration load amount appearing during the transfer of the servomotors to grasp a machining load ratio in real time.

It is preferable to increase an acceleration and deceleration time constant to remove the acceleration and deceleration load amount, however, when it becomes too high, there occurs a disadvantage that a machining capacity of the automatic lathe becomes reduced due to the increase of the cycle time.

Accordingly, a programming should be made so that a time interval is set between the acceleration and the deceleration to remove the load amount of the acceleration and deceleration at the time of the cut machining, and the load amount produced at this time cannot be read by an NC, so as to solve such disadvantages.

In other words, when a tool is initially operated, since the load amount value of the motor can be displayed much bigger than that of the load amount of the motor produced from the machining, it is possible to prevent wrong operations only when the load amount value of the motor of a portion, to which real machining is carried out, is measured in real time after removing the load amount value of the motor for a predetermined time, and it is compared with the set value.

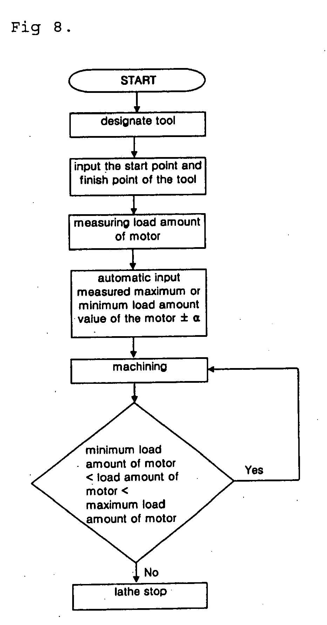

FIG. 8 is a block diagram of a method of detecting a cut of a workpiece by using a load amount of an automatic lathe according to the present invention. We explain progressing processes of the detecting method of the present invention in time as follows. At first, selecting a tool except a cutting tool mounted to the tool posts 13, 14, 15 as a detection tool, and inputting a starting point and a finish point at which the detection tool carries out the cutting detection. It goes without saying that the starting point and the finish point of the detection tool are inputted to move by a workpiece chucked to a chuck.

Then, the load amount of the servomotor is measured by measuring at least one time the load amount of the motor at a no-load state when there was no intervention by the workpiece. In other words, the load amount of the servomotor is measured when the detection tool is not intervened by other workpiece or other tool post to thereby calculate maximum and minimum values.

When the maximum and minimum load amount values of the servomotor are calculated, the maximum and minimum load amount values of the motor are automatically inputted by adding or detracting a predetermined amount (α) to an average amount of the maximum and minimum values. In this instance, the value of (α) is determined as a desired value obtained by the repeated tests, and when the value (α) is relatively big, the maximum and minimum load amount values of the motor become big, and when the value (α) is relatively small, the maximum and minimum load amount values of the motor become small.

Then, the cutting detection is carried out after the machining, and comparing the maximum and minimum load amount values of the motor with the load amount value of the servomotor obtained from the measurement so that an emergency stop of the lathe may be determined. When the load amount value of the servomotor obtained from the measurement is smaller than the maximum load amount value of the motor and bigger than the minimum load amount value of the motor, it represents that a normal cutting of the workpiece is carried out and the workpiece is not detected by the detection tool. However, when the normal cutting is not carried out due to the damage of the cutting tool, and the like, the workpiece should be detected when the cutting detection is carried out, resulting in the increase of the load amount value of the servomotor.

Accordingly, the measured load amount value of the servomotor becomes bigger than the maximum load amount value of the motor, when the cutting of the workpiece is not carried out normally, so that an emergency stop signal is supplied to a servomotor control portion thereby stopping the lathe urgently.

The transferring speed at the starting point and the finish point of the detection tool may be determined according to the material of the workpiece, because the detection tool may be damaged due to the collision of the detection tool with the workpiece when the cutting of the workpiece is not completed. In this regard, a transferring speed of the detection tool may be quick when the workpiece has a relatively low hardness, however, when the workpiece has a relatively high hardness, it is possible to prevent the damage of the detection tool only when the transferring speed of the detection tool is low.

As described above, according to the automatic lathe of the present invention, since the workpiece can be machined at the right and left side surfaces and simultaneously at the front surface at the state of being chucked by the main spindle and guided by the guide bush, it is possible to reduce the machining cycle time to thereby increase a production property, and to maximize a machining efficiency and to facilitate the rear surface machining by adding a separate transferring shaft to the third tool post 15.

In addition, since the tool monitoring and the cutting detection of the workpiece are carried out by using a load amount value of a servomotor for operating respective tool post, it is possible to confirm in real time an abrasion state of the tool and whether the cutting of the workpiece is out of order or not, while the user does not keep on watching the machine or the machined product.

Moreover, it is possible to reduce the expense incurred from the exchange of the tool and occurrence of the disorder by constructing the tool to machine the workpiece to the machining limitation of the tool, and it is possible to reduce the manufacturing expense, and utilize a wider space than before by carrying out the tool monitoring and the cutting detection of the workpiece by using the load amount value of the servomotor without the requirement of the additive device.

While the present invention has been described with reference to the particular illustrative embodiments, it is not to be restricted by the embodiments but only by the appended claims. It is to be appreciated that those skilled in the art can change or modify the embodiments without departing from the scope and spirit of the present invention.

## Claims

1. An automatic lathe comprising a guide bush 12 for guiding a workpiece, and formed with a main spindle (10) and a subspindle (11) for transferring the workpiece, and at least one tool post for machining the workpiece, on which cutting tools are mounted, **characterized in that** the tool post of the automatic lathe is constructed of a first tool post (13) mounted at one side of the guide bush (12) for machining a side surface and a front surface of the workpiece, a second tool post (14) mounted to be opposite to the first tool post(13) with respect to the guide bush (12) for machining the side surface and the front surface of the workpiece, and a third tool post (15) mounted at one side of the guide bush (12) for post-machining the workpiece chucked to the subshaft.

2. The automatic lathe according to claim 1, **characterized in that** the first tool post can reciprocate in the right and left direction (X1) of the workpiece and in the upward and downward direction (Y1) of the workpiece, the second tool post (14) can reciprocate in the right and left direction (X2) of the workpiece and in the upward and downward direction (Y2) of the workpiece, in addition to the front and rear direction (Z2) of the workpiece, and the third tool post (15) can reciprocate in the upward and downward direction (Y3).

3. The automatic lathe according to claim 1 or 2, **characterized in that** the main spindle (10) can reciprocate in the front and rear direction (Z1) of the workpiece, and the subspindle (11) can reciprocate in the front and rear direction (Z3) of the workpiece and in the right and left direction (X3) of the workpiece.

4. The automatic lathe according to one of the preceding claims, **characterized in that** the tool post is formed with a tool turret 16 to oppose the first tool post (13) instead of the second tool post (14).

5. The automatic lathe according to one of the preceding claims, **characterized in that** a maximum load amount value of a servomotor for each tool is measured and stored by performing at least one time of sample machining to measure the load amount of the servomotors mounted behind the tool posts (13, 14, 15), a set value is inputted on the basis of the maximum load amount value of the servomotor, then, the machining is progressed, and a message is produced to thereby temporarily stopping the lathe when the measured load amount value of the servomotor in real time exceeds the set value.

6. The automatic lathe according to one of the preceding claims, **characterized in that** tools other than the cutting tools provided at the tool posts (13, 14, 15) are designated as a detection tool, a starting point and a finish point of the cutting of the detection tool are inputted, then, the load amount of the motor at an unloaded state is measured at least one time, a predetermined value (α) is added to or detracted from the maximum or minimum load amount values of the motor, so that the maximum and minimum load amount values of he motor are previously determined by tests and inputted automatically, and then, the lathe is stopped emergently when the measured load amount value of the motor is outranged from the scope of the minimum load amount value of the motor and the maximum load amount value of the motor.
